# EUROPEAN PATENT SPECIFICATION

(11) **EP 0 816 742 B1**
(45) Date of publication and mention of the grant of the patent: **02.10.2002**
(21) Application number: 97110574.7
(22) Date of filing: 27.06.1997
(51) Int. Cl.: F16L 55/165

(54) **Method and apparatus for reconstructing corroded pipes**
Verfahren und Gerät zum Wiederherstellen von korrodierten Rohrleitungen
Methode et dispositif pour la rénovation de tuyaux corrodées

(30) Priority: 02.07.1996 JP 19139996
(43) Date of publication of application: 07.01.1998
(73) Proprietor: Taisei Corporation, Tokyo 163-0606 (JP)
(72) Inventor: Ueda, Kouhei, c/o Taisei Corporation, Tokyo 163-06 (JP)
(74) Representative: Sajda, Wolf E., Dipl.-Phys.

(56) References cited:
- DE-A- 3 129 870
- PATENT ABSTRACTS OF JAPAN vol. 018, no. 269 (M-1609), 23 May 1994 & JP 06 042679 A (TAISEI CORP), 18 February 1994,
- PATENT ABSTRACTS OF JAPAN vol. 018, no. 363 (M-1635), 8 July 1994 & JP 06 094164 A (TAISEI CORP), 5 April 1994,

## Description

The present invention relates generally to the field of pipe repair and more specifically relates to the reconstruction of corroded pipes. In particular, the invention relates to a method and an apparatus for reconstructing a corroded pipe by inserting a first new pipe into a second existing pipe.

A method and an apparatus according to the preambles of claims 1 and 8, respectively, are known, for example, from JP-B2-03-30757.

Conventional methods for reconstructing a corroded pipe have several limitations. An efficient execution of inserting a new pipe into an existing pipe requires that the length of the new pipe to be inserted into the existing pipe is longer than the existing (old) pipe. However, there are limits regarding the distance to which a jack can be extended in order to advance a long first new pipe into a second existing pipe. In addition, the new pipe can lurch forward as it is being inserted if the frictional resistance between the inner surface of the existing pipe and the outer surface of the new pipe is broken or changes rapidly and/or not uniformily. A balancing function, which will both advance the pipe and restrain its speed, must prevent a sudden rush of motion.

In the prior art according to JP-B2-03-30757 a jack is used which is operated by a hydraulic device and makes a telescopic motion within a limited range. In the conventional device, the ring member is provided at the end of the jack which may catch or release the tail end of the inner pipe.

The ring member is provided for catching the peripheral surface of the pipe, and the jack is extended to push the pipe.

In the conventional device there is no movable or drivable dolly. Rather, a stationary reaction force basement is used which does not carry out any movement along the jack. Rather, the jack is positioned between the reaction force basement and the tail end of the inner pipe. Therefore, the distance to which the jack can be extended is limited to the length of the jack.

Hence, the object underlying the present invention is to provide a method and an apparatus for reconstructing a corroded pipe by inserting a first new pipe into a second existing pipe with a reliable and smooth motion so that a long, new pipe can be inserted.

According to the invention, a method for reconstructing a corroded pipe by inserting a first new pipe into a second existing pipe comprises the features of claim 1. An apparatus according to the invention for reconstructing a corroded pipe by inserting a first new pipe into a second existing pipe comprises the features of claim 8. Further developments of the method and the apparatus according to the invention are specified in the subclaims.

An advantage of the present invention is that the new pipe is smoothly inserted into an existing pipe without jarring or excessive motion.

Another advantage of the invention is that the use of the old pipe makes the method more economical than conventional methods where the new pipe is laid next to the old pipe. Furthermore, the present invention is more efficient and cost-effective as a long length of pipe can be inserted with one round of operations.

Another advantage of the present invention is that it is applicable to a broad range of pipe sizes, as the specific gravity of the pressurized fluid, in particular heavy water can be adjusted. Thus a pipe of either a large or small cross-section can be adjusted to the optimum weight.

A still further advantage of the present invention is that a substantial length of pipe can be inserted so that a considerable distance can be covered with one round of operations, making the method highly efficient.

A feature of the concept of the present invention is that it uses a dolly to transfer reaction force to the old pipe.

Another feature of the concept of the present invention is that a coupling member of a limited length is used to connect the dolly to the new pipe so that the new sections will not move suddenly even if the point or limit of static friction is surpassed. Such a coupling member prevents the dolly and the new pipe from separating beyond a prescribed distance, and enables the dolly to follow the new pipe when pressure is applied.

Another feature of the concept of the present invention is that it uses a pressurized fluid, in particular water to effectively create a solid object out of the new pipe, in order to facilitate insertion.

Another feature of the concept of the present invention is the use of a barrier member mounted on the front end of the inserted new pipe. This barrier member enables fluid, in particular water of a high specific gravity to be injected into the gap between the old and new pipes in order to give the inserted pipe buoyancy. This buoyancy lowers the orthogonal resistance between any old and new pipes.

These and other objects, advantages, and features of the present invention will become readily apparent to those skilled in the art upon reading the present disclosure and having reference to the accompanying drawings related thereto.
- Fig. 1: illustrates the overall configuration of the device according to the invention used for reconstructing a corroded pipe.
- Fig. 2: illustrates the situation and conditions for inserting a new pipe into an old pipe.
- Fig. 3: illustrates the situation and conditions for charging a new pipe with pressurized water.
- Fig. 4: is a plan top view of conditions for inserting a new pipe into an old pipe.
- Fig. 5: is a plan side view of conditions for inserting a new pipe into an old pipe.

Before the method and apparatus for reconstructing corroded pipes are described, it is to be understood that the invention is not limited to the particular components and configurations specifically shown in the drawings and described herein, as such components and configurations may, of course, vary. It is also to be understood that the terminology used herein is used for describing particular embodiments only, and it is not intended to be limiting. The accompanying drawings provide reference for illustrating the inherent processes of the invention in reconstructing a corroded pipe.

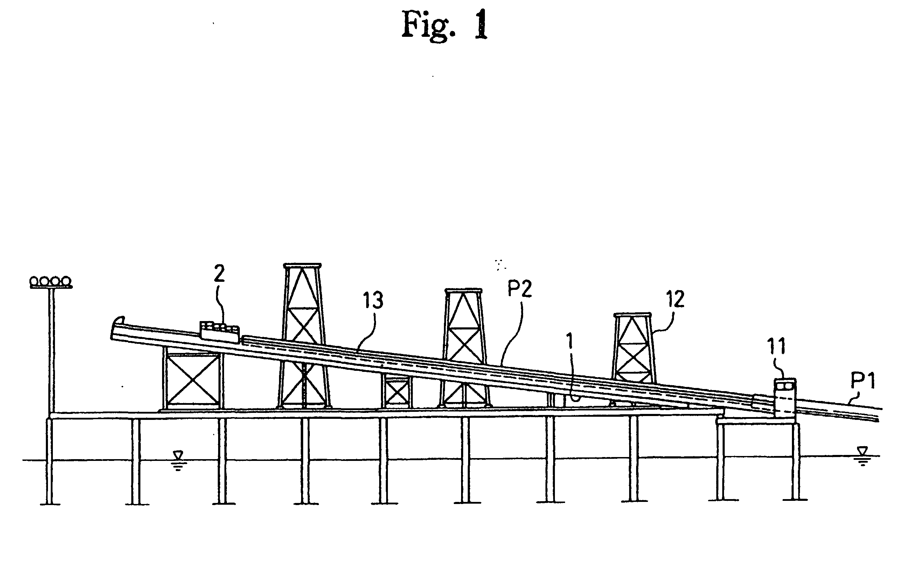

Referring to Fig. 1, the overall configuration of the apparatus used in the method can be seen. A platform 1, which doubles as a work platform 1, is built to raise above the water surface. One end of an existing old pipe P1 is lifted and supported by a retaining section 11 on the work platform 1, and a hoisting device 12 supports a new pipe P2. A rail 13 is installed on the work platform 1, along which a pressure dolly 2 runs.

For pipes buried on the ocean floor, for example, a segment of the existing old pipe P1 is uncovered, cut and raised up to the retaining section 11 on the work platform 1. A new pipe P2 is attached to the pressure dolly 2 and inserted into the existing pipe P1 from this raised end.

The working area is built on an incline. The rail 13 is installed on top of the platform 1. The dolly 2 is loaded onto the rail 13 and moved to the top. Its return movement down the rail 13 inserts the new pipe P2 into the open end of an old existing pipe P1.

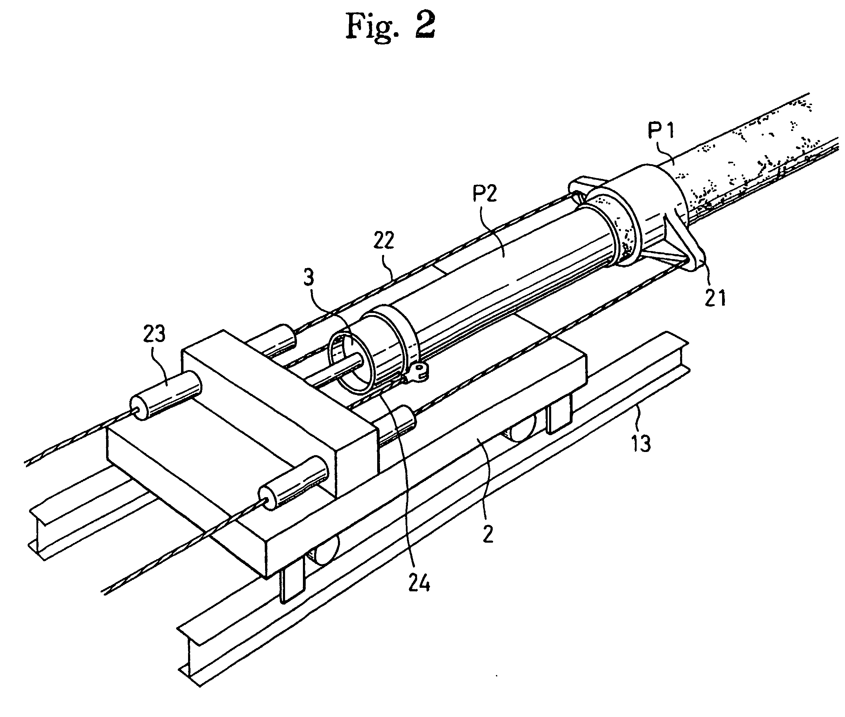

Referring now to Fig. 2 of the drawings, the situation and conditions for inserting the new pipe P2 into the old pipe P1 can be seen. The motive force for the dolly 2 is the necessary pushing force to advance the new pipe P2. To move the dolly 2, a reaction force pad 21 is mounted around a section of the existing pipe P1. Two central-hole jacks, namely jacks 23 are attached on either side of the dolly 2, and one end of a steel cable 22 is threaded through each jack 23 at either side of the reaction force pad 21. Repeated extension, gripping and releasing actions of jacks 23 forcefully move the dolly 21 down the rail 13.

To insert the new pipe P2, one end of a section of pipe P2 of a fixed length is sealed off and inserted into the existing pipe P1; then another section is welded onto the tail end and inserted. This welding and insertion process is repeated to extend the new pipe P2 to the required length.

The new pipe P2 is coupled to the dolly 2 by means of a plug 3, which is inserted at the tail end of the new pipe P2. Specifically, the plug 3 of an external diameter equal to the inner diameter of the new pipe P2 is set on the front face of the dolly 2, namely the face closest to the existing pipe P1. Then, the new pipe P2 is filled with a fluid, in particular water and, in this condition, receives the plug 3. The undiminished force from the pressure of the plug 3 acts on the front end of the new pipe P2, and by moving the dolly 2 forward, the new pipe P2 is inserted and further advances into the existing pipe P1.

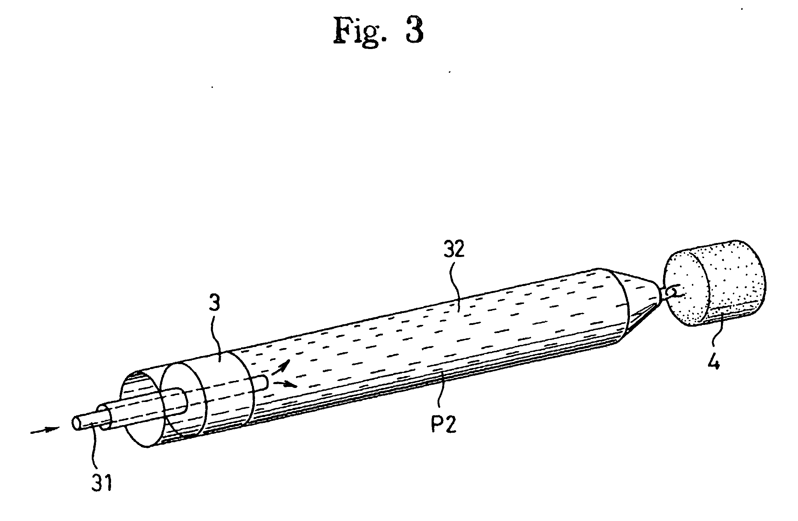

Referring now to Fig. 3 of the drawings, a description of the delivery of pressurized fluid, in particular water, into the new pipe P2 is provided. Pressurized water supply is fed into the new pipe P2, for example by installing a water pipe 31 through the plug 3 and feeding pressurized water 32 into the new pipe P2, which has been sealed by the aforementioned plug 3. Consequently, the water pressure will be greater than the force that the pressure of the dolly 2 exerts on the plug 3. The feeding of pressurized water 32 yields the same pulling force on the front end of the new pipe P2 as on the inner face of the plug 3, in effect creating one long solid object, as shown in Fig. 3.

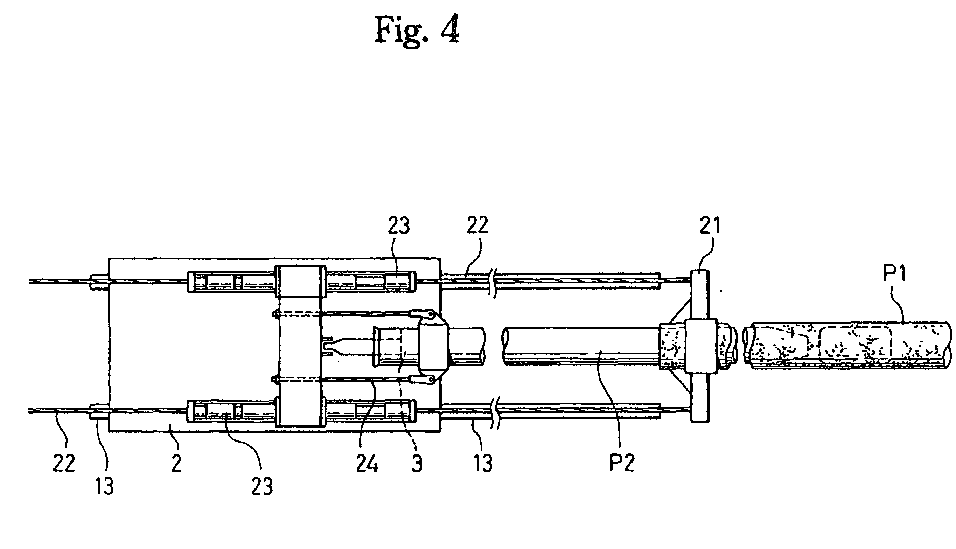

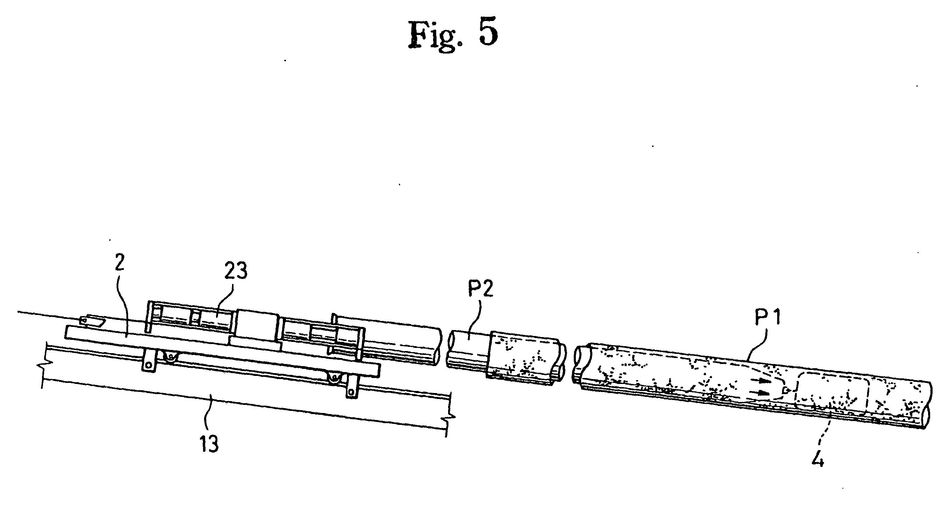

Referring now to Figs. 4 and 5 of the drawings, the situation and conditions for inserting the new pipe P2 into the old pipe P1 can be seen. Jacks 23 are mounted on the pressure dolly 2. Through the repeated extension, gripping and releasing processes of the center-holed jacks 23, in co-operation with the reaction force taken up by steel cables 22, the dolly 2 is moved forcefully along the rail 13. With the plug 3 protruding at the front end of the dolly 2, the movement of the dolly exerts a force on the plug 3. The same force acts on the front end of the new pipe P2 via pressurized water 32. As a result, despite the pressure acting on its tail end, the new pipe P2 is inserted into the existing pipe P1 as if its front end were being pulled.

The pressure dolly 2 moves along the whole length of the rail 13 which is installed upon the platform 1 as shown in Fig. 1. As such, a long extension of the new pipe P2, limited only by the length of the rail 13, can be inserted into the existing pipe P1. The rail 13 is actually installed longer than the length of a section of the new pipe P2 such that pulling steel cables 22 of the dolly 2 continues to move the dolly 2 along the entire length thereof.

Referring back to Figs. 4 and 5 of the drawings, the use of heavy water in the invention can be seen. In order to reduce the load of the new pipe P2, water of a high specific gravity is charged into the minute gap between the old pipe P1 and the new pipe P2. This creates a buoyancy corresponding to the specific gravity, which lowers the orthogonal resistance of the new pipe P2.

However, heavy water is expensive, and it would be extravagant to inject water to fill the entire volume over the whole length of the existing pipe P1, only to have it rush out the open end of the existing pipe P1 as the new pipe P2 advances. Accordingly, a barrier member 4 is attached to the new pipe P2, see Fig. 3. Preferably, the barrier member 4 is chained to the new pipe P2. However, other means can also be used to attach the barrier member 4 to the front end of the new pipe P2.

The barrier member 4 is a cylindrical body of a diameter larger than that of the old pipe P1. The barrier member 4 is formed from a flexible material. Any flexible material can be used to form the barrier member 4. The barrier member 4 is pushed by and moves ahead of the new pipe P2, thus blocking off the area in front of it. As a result, heavy water need only be injected behind the barrier member 4. In other words, only the space around the circumference of the new pipe P2 need to be charged with heavy water. This greatly reduces the necessary volume.

The insertion of the new pipe P2 requires the welding of pipe sections and other operations, and the whole length of the pipe cannot be inserted in one continuous operation, see Figs. 4 and 5. It is possible that as each new section is inserted, the new pipe P2 could move forward instantly and move by too much, at a moment where the point of static friction is surpassed. To prevent excessive movement, however, the dolly 2 and the tail end of the new pipe P2 are connected by a coupling member 24, which is limited in length. Preferably, steel cables are used for the coupling member 24. However, the coupling member 24 is not limited to steel cables; rather, other means can also be used as a coupling member 24. For example, a rod for which the position can be varied can be used as a coupling member 24. Alternatively, a flexible member can also be used. The presence of the coupling member 24 prevents the dolly 2 and the new pipe P2 from separating beyond a prescribed distance, and it enables the dolly 2 to follow the new pipe P2 with its slight shift in position when pressure is applied.

Insertion of the new pipe P2 stops when the pressure dolly 2 reaches the lower end of the rail 13, that is near the open end of the existing pipe P1. At that point, the dolly 2 is reversed to the opposite end of the rail 13. For this purpose, a winch is set on the rear end of the rail 13, and as the cable is wound around the winch, the dolly 2 is raised to the upper limit of the rail 13, see Fig. 1 of the drawings. Next, a hoisting device 12 is used to raise the next section of the new pipe P2, and its front end is welded onto the tail end of the recently inserted new pipe P2. A process of welding another section of the new pipe P2 and inserting it is repeated until the new pipe P2 is pushed out of the other end of the existing pipe P1, thereby completing the reconstruction process.

## Claims

1. A method for reconstructing a corroded pipe by inserting a first new pipe (P2) into a second existing pipe (P1), comprising the following steps:
a) providing a first pipe (P2) having a front end and a tail end, wherein the front end is sealed off,
b) inserting the front end of the first pipe (P2) into the second pipe (P1),
c) filling the first pipe (P2) with a pressurized fluid, in particular water,
d) moving the first pipe (P2) forward by the pressurized fluid and a pressure applied to the tail end of the first pipe (P2),
**characterized by** the following steps:
e) inserting the tail end of the first new pipe (P2) into a dolly (2) adapted to travel along the rail (13),
f) inserting a plug (3) into the dolly (2) from the tail end of the first new pipe (P2), and
g) moving the dolly (2) toward the second existing pipe (P1) in order to insert and advance the first new pipe (P2) into the second existing pipe (P1).

2. The method of claim 1,
wherein the dolly (2) and the tail end of the first new pipe (P2) are linked by a coupling member (24) limited in length, thereby restricting the separation of the dolly (2) and the first new pipe (P2).

3. The method of claim 1 or 2,
wherein a dolly (2) is used which comprises the mounting of a central-hole jack assembly (22, 23) on the dolly (2), the central-hole jack assembly (22, 23) comprising a central-hole jack (23) and steel cables (22) attached at one end to the central-hole jack (23), and the steel cables (22) attached at the other end of the existing pipe (P1), the method further comprising the step of
h) moving the dolly (2) toward the existing pipe (P1) through the repeated extension, gripping and releasing of the steel cables (22) by the jack (23).

4. The method of any of claims 1 to 3, further comprising the following step:
i) providing a work platform (1) over the second existing pipe (P1), wherein the platform (1) has one end supporting the second existing pipe (P1) and an additional end raised above the level of the second existing pipe (P1).

5. The method of claim 4,
wherein a platform (1) is used which comprises a retaining section (11) to support the free end of the second existing pipe (P1), and a rail (13) to run the dolly (2),
wherein the method further comprises the following steps:
j) hoisting the first new pipe (P2) onto the platform (1) and onto the rail (13);
k) loading the dolly (2) with the first new pipe (P2) and raising the dolly (2) to the upper end of the platform (1); and
1) running the dolly (2) to run down the platform (1) towards the second existing pipe (P1).

6. The method of any of claims 1 to 5,
wherein a barrier member (4) is attached to the front end of the pressurized fluid-filled first new pipe (P2),
wherein the barrier member (4) is of sufficient diameter to block off the cross-section of the second existing pipe (P1).

7. The method of claim 6,
wherein heavy water is injected as the fluid behind the barrier member (4).

8. An apparatus for reconstructing a corroded pipe (P1) by inserting a first new pipe (P2) into a second existing pipe (P1), comprising
- a platform (1) of a predetermined length adapted to the length of the first new pipe (P2) to be installed,
- a rail (13) mounted along the length of the platform (1),
- a dolly (2) provided for moving along the rail (13) and adapted for securing the one end of the first new pipe (P2), and
- power supply means for the new pipe (P2) for supplying pressurized fluid to move and push the new pipe (P2) into the existing pipe (P1) wherein the dolly (2) is guided and runs along the rail (13) during inserting the new pipe (P2).

9. The apparatus according to claim 8,
wherein the dolly (2) and the tail end of the first new pipe (P2) are linked by a coupling member (24) limited in length, thereby restricting the separation of the dolly (2) and the first new pipe (P2).

10. The apparatus according to claim 8 or 9,
wherein the dolly (2) comprises a central-hole jack assembly (22, 23) which is provided with central-hole jacks (23) and steel cables (22) attached at the one end to the central-hole jacks (23) and attached at the other end to the second existing pipe (P1),
wherein the dolly (2) is adapted to move along the rail (13) to the second existing pipe (P1) through a repeated extension, gripping and releasing of the steel cables (22) by the jacks (23).

## Patentansprüche

1. Verfahren zum Wiederherstellen eines korrodierten Rohrs durch Einsetzen eines ersten, neuen Rohrs (P2) in ein zweites, vorhandenes Rohr (P1), wobei das Verfahren folgende Schritte aufweist:
a) Bereitstellen eines ersten Rohrs (P2), das ein vorderes Ende und ein hinteres Ende aufweist, wobei das vordere Ende dicht verschlossen ist,
b) Einsetzen des vorderen Endes des ersten Rohrs (P2) in das zweite Rohr (P1),
c) Füllen des ersten Rohrs (P2) mit einem druckbeaufschlagten Fluid, insbesondere Wasser,
d) Vorwärtsbewegen des ersten Rohrs (P2) mit dem druckbeaufschlagten Fluid sowie mit einem auf das hintere Ende des ersten Rohrs (P2) aufgebrachten Druck,
**gekennzeichnet durch** folgende Schritte:
e) Einsetzen des hinteren Endes des ersten, neuen Rohrs (P2) in einen Dolly (2), der längs einer Schiene (13) verfahrbar ist,
f) Einsetzen eines Stopfens (3) in den Dolly (2) von dem hinteren Ende des ersten, neuen Rohrs (P2) her, und
g) Bewegen des Dollys (2) in Richtung auf das zweite, vorhandene Rohr (P1), um das erste, neue Rohr (P2) in das zweite, vorhandene Rohr (P1) einzuführen und in diesem vorwärts zu bewegen.

2. Verfahren nach Anspruch 1,
wobei der Dolly (2) und das hintere Ende des ersten, neuen Rohrs (P2) durch ein Kopplungselement (24) mit begrenzter Länge verbunden sind, um dadurch die Beabstandung des Dollys (2) und des ersten, neuen Rohrs (P2) zu begrenzen.

3. Verfahren nach Anspruch 1 oder 2,
wobei ein Dolly (2) verwendet wird, der die Anbringung einer Hubbewegungsanordnung (22, 23) mit zentraler Öffnung an dem Dolly (2) aufweist, wobei die Hubbewegungsanordnung (22, 23) mit zentraler Öffnung eine Hubbewegungseinrichtung (23) mit zentraler Öffnung sowie Stahlseile (22) aufweist, die an dem einen Ende an der Hubbewegungseinrichtung (23) mit zentraler Öffnung angebracht werden, wobei die Stahlseile (22) an ihrem anderen Ende an dem vorhandenen Rohr (P1) angebracht werden,
wobei das Verfahren folgenden weiteren Schritt aufweist:
h) Bewegen des Dollys (2) in Richtung auf das vorhandene Rohr (P1) durch wiederholtes Ausfahren, Greifen und Freigeben der Stahlseile (22) durch die Hubbewegungseinrichtung (23).

4. Verfahren nach einem der Ansprüche 1 bis 3,
das weiterhin folgenden Schritt aufweist:
i) Bereitstellen einer Arbeitsplattform (1) über dem zweiten, vorhandenen Rohr (P1), wobei die Plattform (1) an ihrem einen Ende das zweite, vorhandene Rohr (P1) abstützt und an einem weiteren Ende über das Niveau des zweiten, vorhandenen Rohrs (P1) angehoben wird.

5. Verfahren nach Anspruch 4,
wobei eine Plattform (1) verwendet wird, die einen Festhaltebereich (11) zum Abstützen des freien Endes des zweiten, vorhandenen Rohrs (P1) sowie eine Schiene (13) zum Verfahren des Dollys (2) aufweist,
wobei das Verfahren folgende weitere Schritte aufweist:
j) Aufziehen des ersten, neuen Rohrs (P2) auf die Plattform (1) und auf die Schiene (13);
k) Bestücken des Dollys (2) mit dem ersten, neuen Rohr (P2) und Transportieren des Dollys (2) nach oben zu dem oberen Ende der Plattform (1); und
l) Laufenlassen des Dollys (2) die Plattform (1) hinab in Richtung auf das zweite, vorhandene Rohr (P1)

6. Verfahren nach einem der Ansprüche 1 bis 5,
wobei ein Barrierenelement (4) an dem vorderen Ende des mit druckbeaufschlagtem Fluid gefüllten ersten, neuen Rohrs (P2) angebracht wird, wobei das Barrierenelement (4) einen ausreichenden Durchmesser zum Absperren des Querschnitts des zweiten, vorhandenen Rohrs (P1) aufweist.

7. Verfahren nach Anspruch 6,
wobei als Fluid schweres Wasser hinter dem Barrierenelement (4) eingespritzt wird.

8. Vorrichtung zum Wiederherstellen eines korrodierten Rohrs (P1) durch Einsetzen eines ersten, neuen Rohrs (P2) in ein zweites, vorhandenes Rohr (P1), wobei die Vorrichtung folgendes aufweist:
- eine Plattform (1) mit einer vorbestimmten Länge, die an die Länge des zu installierenden, ersten, neuen Rohrs (P2) angepaßt ist,
- eine Schiene (13), die entlang der Länge der Plattform (1) angebracht ist,
- einen Dolly (2), der zur Bewegung entlang der Schiene (13) vorgesehen ist und der für die Befestigung des einen Endes des ersten, neuen Rohrs (P2) ausgebildet ist, und
- eine Energieversorgungseinrichtung für das neue Rohr (P2), um druckbeaufschlagtes Fluid zum Bewegen und Drücken des neuen Rohrs (P2) in das vorhandene Rohr (P1) hinein zuzuführen, wobei der Dolly (2) während des Einführens des neuen Rohrs (P2) geführt wird und sich längs der Schiene (13) bewegt.

9. Vorrichtung nach Anspruch 8,
wobei der Dolly (2) und das hintere Ende des ersten, neuen Rohrs (P2) durch ein Kopplungselement (24) mit begrenzter Länge verbunden sind, um dadurch die Beabstandung des Dollys (2) und des ersten, neuen Rohrs (P2) zu begrenzen.

10. Vorrichtung nach Anspruch 8 oder 9,
wobei der Dolly (2) eine Hubbewegungsanordnung (22, 23) mit zentraler Öffnung aufweist, die mit Hubbewegungseinrichtungen (23) mit zentraler Öffnung sowie Stahlseilen (22) versehen ist, die an dem einen Ende an den Hubbewegungseinrichtungen (23) mit zentraler Öffnung angebracht sind und an dem anderen Ende an dem zweiten, vorhandenen Rohr (P1) angebracht sind;
wobei der Dolly (2) dazu ausgebildet ist, sich durch wiederholtes Ausfahren, Greifen und Freigeben der Stahlseile (22) durch die Hubbewegungseinrichtungen (23) die Schiene (13) entlang zu dem zweiten, vorhandenen Rohr (P1) zu bewegen.

## Revendications

1. Méthode de reconstitution d'un tuyau corrodé en insérant un premier nouveau tuyau (P2) dans un deuxième tuyau existant (P1), comprenant les étapes suivantes consistant à :
a) prévoir un premier tuyau (P2) possédant une extrémité avant et une extrémité arrière, dans laquelle est colmatée l'extrémité avant,
b) insérer l'extrémité avant du premier tuyau (P2) dans le deuxième tuyau (P1),
c) remplir le premier tuyau (P2) d'un liquide sous pression, plus particulièrement de l'eau,
d) déplacer le premier tuyau (P2) vers l'avant à l'aide du liquide sous pression et d'une pression exercée sur l'extrémité arrière du premier tuyau (P2),
et **caractérisée par** les étapes suivantes consistant à :
e) insérer l'extrémité arrière du premier nouveau tuyau (P2) dans un chariot (2) adapté pour se déplacer le long du rail (13),
f) insérer un embout (3) dans le chariot (2) à partir de l'extrémité arrière du premier nouveau tuyau (P2), et
g) déplacer le chariot (2) en direction du deuxième tuyau existant (P1) afin d'insérer et de faire avancer le premier nouveau tuyau (P2) dans le deuxième tuyau existant (P1).

2. Méthode selon la revendication 1, dans laquelle le chariot (2) et l'extrémité arrière du premier nouveau tuyau (P2) sont reliés par un élément de couplage (24) limité en termes de longueur, et restreignant ainsi la séparation du chariot (2) et du premier nouveau tuyau (P2).

3. Méthode selon la revendication 1 ou 2, dans laquelle un chariot (2) est utilisé, qui comprend le montage d'un assemblage de vérin à trou central (22, 23) sur le chariot (2), ledit assemblage de vérin à trou central (22, 23) comprenant un vérin à trou central (23) et des câbles en acier (22) attachés à une extrémité au vérin à trou central (23), les câbles en acier (22) étant attachés à l'autre extrémité au tuyau existant (P1), ladite méthode comprenant en outre l'étape consistant à ;
h) déplacer le chariot (2) en direction du tuyau existant (P1) par le biais de l'extension, de l'ancrage et du desserrage répétés des câbles en acier (22) par le vérin (23).

4. Méthode selon les revendications 1 à 3, comprenant en outre l'étape suivante consistant à :
i) placer une plate-forme de travail (1) sur le deuxième tuyau existant (P1), dans laquelle la plate-forme (1) possède une extrémité supportant ledit deuxième tuyau existant (P1) et une extrémité supplémentaire soulevée au-dessus du niveau dudit deuxième tuyau existant (P1).

5. Méthode selon la revendication 4, dans laquelle une plate-forme (1) est utilisée, qui comprend une section de retenue (11) servant à supporter l'extrémité libre du deuxième tuyau existant (P1), et un rail (13) servant à faire coulisser le chariot (2), dans laquelle la méthode comprend en outre les étapes suivantes consistant à :
j) soulever le premier nouveau tuyau (P2) sur la plate-forme (1) et sur le rail (13) ;
k) charger le chariot (2) avec le premier nouveau tuyau (P2) et soulever le chariot (2) jusqu'à l'extrémité supérieure de la plate-forme (1); et
l) déplacer le chariot (2) afin de faire descendre la plate-forme (1) jusqu'au deuxième tuyau existant (P1).

6. Méthode selon les revendications 1 à 5, dans laquelle un élément formant barrière (4) est relié à l'extrémité avant du premier nouveau tuyau (P2) rempli de liquide sous pression, et dans laquelle ledit élément formant barrière (4) possède un diamètre suffisant pour bloquer la section transversale du deuxième tuyau existant (P1).

7. Méthode selon la revendication 6, dans laquelle de l'eau lourde est injectée en tant que liquide derrière l'élément formant barrière (4).

8. Appareil de reconstitution d'un tuyau corrodé (P1) en insérant un premier nouveau tuyau (P2) dans un deuxième tuyau existant (P1), comprenant :
- une plate-forme (1) de longueur prédéterminée adaptée à la longueur du premier nouveau tuyau (P2) et devant être installée,
- un rail (13) monté le long de la plate-forme (1),
- un chariot (2) destiné à se déplacer le long du rail (13) et adapté pour fixer une extrémité du premier nouveau tuyau (P2), et
- des moyens d'alimentation en puissance pour le nouveau tuyau (P2) destinés à fournir du liquide pressurisé pour déplacer et pousser le nouveau tuyau (P2) dans le tuyau existant (P1), dans lequel le chariot (2) est guidé et se déplace le long du rail (13) pendant l'insertion du nouveau tuyau (P2).

9. Appareil selon la revendication 8, dans lequel le chariot (2) et l'extrémité arrière du premier nouveau tuyau (P2) sont reliés à l'aide d'un élément de couplage (24) limité en termes de longueur, restreignant ainsi la séparation du chariot (2) et du premier nouveau tuyau (P2).

10. Appareil selon la revendication 8 ou 9, dans laquelle le chariot (2) comprend un assemblage de vérin à trou central (22, 23) qui se compose de vérins à trou central (23) et de câbles en acier (22) reliés à une extrémité aux vérins à trou central (23) et attachés à l'autre extrémité au deuxième tuyau existant (P1), et dans lequel le chariot (2) est adapté pour se déplacer le long du rail (13) vers le deuxième tuyau existant (P1) par le biais d'une extension, d'un ancrage et d'un desserrage répétés des câbles en acier (22) par les vérins (23).
